# EUROPÄISCHE PATENTSCHRIFT

(11) **EP 2 026 033 B1**
(45) Veröffentlichungstag und Bekanntmachung des Hinweises auf die Patenterteilung: **10.06.2009**
(21) Anmeldenummer: 07015924.9
(22) Anmeldetag: 14.08.2007
(51) Int. Cl.: G01B 11/04, G01B 21/06

(54) **Verfahren und Vorrichtung zur dynamischen Erzeugung und Weitergabe von Geometriedaten**
Method and device for dynamic generation and transfer of geometry data
Procédé et dispositf pour production et transmission dynamique des données géométriques

(43) Veröffentlichungstag der Anmeldung: 18.02.2009
(73) Patentinhaber: SICK AG, 79183 Waldkirch (DE)
(72) Erfinder: Nübling, Achim, 79312 Emmendingen (DE); Schopp, Thomas, 79112 Freiburg (DE)
(74) Vertreter: Ludewigt, Christoph

(56) Entgegenhaltungen:
- EP-A- 1 645 838
- EP-A1- 0 851 209
- EP-A2- 1 262 800
- WO-A-00/42381
- JP-A- 2000 241 135

## Beschreibung

Die Erfindung betrifft eine Objektgeometrie-Vermessungsvorrichtung und ein Verfahren zur dynamischen Erzeugung und Weitergabe von Geometriedaten nach den Oberbegriffen von Anspruch 1 beziehungsweise 11.

Bei Systemen der Objekterkennung und Objektvermessung müssen Informationen über die Form, die Dimensionen und/oder Strukturen eines Objekts ermittelt werden. Dafür können optoelektronische Sensoren eingesetzt werden, beispielsweise Laserscanner, Kamerasysteme oder auch integrierte Systeme, die sowohl einen Bildsensor wie auch eine auf Lichtlaufzeit basierte Abstandsmessung umfassen. Ein Beispiel für derartige integrierte Systeme ist ein Sensor, welcher gleichzeitig einen scannenden Abtaststrahl und einen Aufnahmechip aufweist, oder der ohne zusätzlichen Aufnahmechip sowohl das Remissionsverhalten wie auch die Laufzeit des ausgesandten Abtaststrahls bestimmen kann. Ein anderes Beispiel sind auf der Photonmischdetektion (PMD) basierende CMOS-Chips, deren Pixel sowohl Helligkeitsdaten wie auch mit einem Lichtlaufzeitverfahren bestimmte Entfernungsdaten aufnehmen können.

Die derart erfassten Dimensions- und Positionsinformationen können verwendet werden, um Objekte zu greifen, etwa durch einen Roboter, um andere Systeme an der Orientierung des Objekts auszurichten, oder um vorab wichtige Ausschnitte der Objekte für eine spätere genauere Auswertung zu identifizieren.

Bei einer wichtigen Klasse von Objektgeometrievermessungen ist das System an einem Förderband montiert, auf dem sich die Objekte vorbeibewegen, während ihre Außenkontur zeilenweise abgetastet wird. Noch während der Abtastung, also ehe das Objekt vollständig an dem System vorbeibewegt wurde, werden Geometriedaten dynamisch in Echtzeit an nachgeordnete Einheiten weitergeleitet. So kann beispielsweise ein Roboter seine Greifbewegung bereits planen, noch während weitere Teile der Objektgeometrie bestimmt werden. Dabei muss von dem Vermessungssystem eine große Datenmenge übergeben werden, um die Objektgeometrie zu beschreiben.

Bei herkömmlichen Systemen werden die Eckpunkte des Objekts und seine Höhe ermittelt. Darüber wird die Lage und Orientierung des Objekts definiert. Damit lässt sich die Datenmenge begrenzen, weil unter der Annahme eines quaderförmigen Objekts wenige Informationen genügen, um die Geometrie zu beschreiben. Bei nicht quaderförmigen Objekten wird ein umhüllender Quader definiert und dieser zur Bestimmung der Geometriedaten verwendet. Innerhalb des Objekts werden Zwischeninformationen in regelmäßigen Abständen zu jeder abgetasteten Zeile generiert. Diese Zwischeninformationen bestehen typischerweise aus einer linken und rechten Begrenzung des Objekts in Zeilenrichtung. Nachteilig bei diesem Stand der Technik ist, dass der regelmäßige Abstand groß genug gewählt werden muss, damit die anfallenden Datenmengen die Übermittlungskapazität der Datenstrecke zu einem angeschlossenen nachgeordneten System und die Verarbeitungskapazität des angeschlossenen Systems nicht überschreiten. Der zeitliche und geometrische Abstand zwischen der Übertragung zweier Zwischeninformationen und damit die Auflösung der Geometriedaten ist somit in seiner Genauigkeit begrenzt. Speziell für nicht quaderförmiger Objekte sind damit die Informationen zur örtlichen Lage und Orientierung nur ungenau beziehungsweise unvollständig. Während quaderförmige Objekte sich hinsichtlich ihrer Lage und Orientierung auch mit wenigen Zwischeninformationen gut extrapolieren lassen, noch ehe die abschließenden Informationen vorliegen, ist das genannte herkömmlichen Verfahren für beliebig geformte Objekte ungeeignet.

Aus WO 00/42381 ist eine Geometrievermessungsanordnung bekannt, wobei eine reduzierte Datenmenge vom Sensor übergeben wird.

Aus der DE 10 2004 049 482 A1 ist eine Anordnung eines Geometrievermessungssystems und einer nachgeordneten Zeilenkamera bekannt, bei der das Geometrievermessungssystem interessierende Bereiche, insbesondere solche mit Codeinformationen, von auf einem Förderband bewegten Objekten erkennt. Die Zeilenkamera kann dann gezielt nur die interessierenden Bereiche aufnehmen oder auswerten. Wie bei den im letzten Absatz beschriebenen herkömmlichen Systemen werden dabei aber die Geometriedaten in regelmäßigen Abständen übergeben, so dass die Nachteile bei unregelmäßig geformten Objekten hiermit nicht überwunden werden.

Es ist daher Aufgabe der Erfindung, ein Geometrievermessungssystem anzugeben, welches dynamisch Geometriedaten aufnehmen und mit einer begrenzten Datenmenge hoch aufgelöste Geometrieinformationen übergeben kann.

Diese Aufgabe wird durch eine Objektgeometrie-Vermessungsvorrichtung gemäß Anspruch 1 und durch ein Verfahren gemäß Anspruch 11 gelöst. Mit der erfindungsgemäßen Lösung wird die Geometrie zunächst hoch aufgelöst erfasst, so dass auch alle relevanten Geometrieinformationen unregelmäßig geformter Objekte bekannt sind. Um die weitergegebene Datenmenge zu reduzieren, werden aber nur dann Geometrieinformationen ausgegeben, wenn in den zuletzt vermessenen Abschnitten des Objekts größere Änderungen erkannt werden. Solange also Teilbereiche des Objekts regelmäßig sind, werden keine oder nur weniger Geometrieinformationen übergeben, weil ein nachgeordnetes System, für das die Geometriedaten verfügbar gemacht werden, die Struktur des Objekts durch Extrapolation hinreichend genau erfassen kann. Ist dagegen ein Teilbereich unregelmäßig geformt, so werden Geometrieinformationen mit einer höheren Informationsdichte weitergegeben, damit nachgeordnete Systeme diese Änderungen berücksichtigen können.

Damit ist der Vorteil verbunden, unregelmäßige Objektgeometrien ohne größere praktische Verluste an relevanter Auflösung mit einer begrenzten Datenmenge und damit auch auf Leitungen oder Bussystemen mit begrenzter Bandbreite übergeben beziehungsweise diese Daten auch mit nachgeordneten Systemen begrenzter Datenaufnahme- und Rechenkapazität weiterverarbeiten zu können.

Die Erfindung geht dabei von dem Prinzip aus, kompliziertere Objektkonturen aufwändiger zu beschreiben und weiterzugeben als einfachere und daher durch Extrapolation erfassbare Geometrien. Damit können Informationen zu beliebig geformten Objekten reduziert werden, ohne relevanten Informationsgehalt zum Objekt zu verlieren. Die Daten der zu übergebenden Geometrieinformationen werden derart gestaltet, dass die Datenübermittlung optimal genutzt wird.

Bevorzugt ist der erste Sensor ein Zeilensensor und jeder Abschnitt eine Zeile, und die ausgegebenen Geometriedaten sind die Positionen von Kanten oder Ecken der Objekte oder interessierender Bereiche, insbesondere Codebereiche, innerhalb jeder Zeile. Dabei wird hier und im Folgenden kein Unterschied zwischen einer zweidimensionalen und einer dreidimensionalen Geometrie gemacht, die beide von der Erfindung umfasst sind. Insofern müssen die Begriffe "Fläche", "Kante" und "Ecke" in einer zweidimensionalen Geometrie sinngemäß und nicht wörtlich aufgefasst werden, so kann beispielsweise in manchen zweidimensionalen Situationen eine "Kante" einer "Fläche" entsprechen. Der quer zur Förderrichtung stehende Zeilensensor nimmt dann die Objektgeometrie während des Vorbeibewegens der Objekte zeilenweise auf und gibt kompakt die relevanten Daten über Kanten oder Ecken weiter, mit denen die Geometrie des Objektes im Wesentlichen beschrieben ist

Vorteilhafterweise ist die erste Steuerung dafür ausgebildet, zu jeder Kante oder Ecke je einen Gradientenvektor für die angrenzenden Flächen auszugeben und erst dann weitere Geometriedaten zu einer Kante oder Ecke auszugeben, wenn sich der Gradient einer Fläche in einem Abschnitt gegenüber dem ausgegebenen Gradientenvektor oder demjenigen des vorherigen Abschnitts um mehr als eine vorgegebene Gradientenschwelle verändert. Damit kann die abzugebende Datenmenge weiter reduziert werden, weil aus der Position von Ecke oder Kante und dem zugehörigen Gradientenvektor die Objektgeometrie des nächsten vorbeibewegten Abschnitts extrapoliert werden kann und, solange der Gradient sich nicht stark verändert, diese Extrapolation die Objektgeometrie auch sehr genau erfasst. Die erforderliche Genauigkeit für die Extrapolation und damit die Auflösung der Geometriedaten kann über die Gradientenschwelle eingestellt werden.

Bevorzugt ist die erste Steuerung dafür ausgebildet, Geometriedaten für jeden Abschnitt auszugeben, wenn die Veränderungen größer sind als eine vorgegebene Schwelle, und keine oder nur für jeden n-ten Abschnitt Geometriedaten auszugeben, wenn die Veränderungen kleiner sind als eine vorgegebene Schwelle. Ändert sich also die Objektgeometrie von Abschnitt zu Abschnitt sehr stark, so werden Geometriedaten mit der durch die Bandbreite begrenzten maximalen Genauigkeit übergeben. Weniger starke Änderungen in der Objektgeometrie können zur Entlastung der Übertragungsleitungen und der nachgeordneten Systeme durch abgestufte Auslassung von Geometriedaten für Abschnitte, in denen das Objekt gemessen an der Schwelle regelmäßig geformt ist, mit einer geringeren Auflösung übergeben werden. Damit kann auf einfache Weise eine Anpassung der übergebenen Datenmenge an die Änderungen der Objektgeometrie realisiert werden, um trotz begrenzter Datenmengen eine hohe Genauigkeit in der Auflösung zu erreichen.

Vorteilhafterweise weisen die Geometriedaten eine Lage, ein Volumen, eine Kontur und/oder eine Orientierung der Objekte auf. Dies sind Informationen über die Objektgeometrie, die für nachgeordnete Systeme bei der Steuerung ihrer Aufgaben mit den vermessenen Objekten besonders hilfreich sind.

In Weiterbildung der Erfindung ist die Geometrie-Vermessungsvorrichtung Teil einer Lesevorrichtung für Codes, welche zusätzlich einen integrierten oder in Förderrichtung nachgeordneten zweiten optoelektronischen Sensor, der für die Erfassung von Codes ausgelegt ist, sowie eine zweite Schnittstelle für den Empfang der Geometriedaten aufweist. Der zweite optoelektronische Sensor kennt also für die Codelesung die Geometrie der Objekte und kann entsprechend eingestellt werden und sich auf Bereiche konzentrieren, in denen tatsächlich Codes liegen.

In der Lesevorrichtung ist vorteilhafterweise eine zweite Steuerung des zweiten Sensors vorgesehen, welche dafür ausgebildet ist, Bilddaten innerhalb durch die Geometriedaten bezeichneter Objekte oder interessierender Bereiche ausschließlich oder mit höherer Genauigkeit aufzunehmen oder auszuwerten und entsprechend Bilddaten außerhalb durch die Geometriedaten bezeichneter Objekte oder interessierender Bereiche gar nicht oder mit geringerer Genauigkeit aufzunehmen oder auszuwerten. Der zweite Sensor nutzt damit die Geometriedaten aus, um sich auf die eigentliche Aufgabe der Codelesung konzentrieren zu können und irrelevante Bereiche im Sichtfeld von vornherein zu ignorieren oder nur grob auszuwerten.

Weiterhin kann die zweite Steuerung vorteilhaft dafür ausgebildet sein, Objektgrenzen oder Grenzen interessierender Bereiche anhand von übergebenen Positionen von Kanten oder Ecken der Objekte oder interessierenden Bereiche zu bestimmen und diese Grenzen zu interpolieren und/oder zu extrapolieren, insbesondere linear mittels eines ebenfalls übergebenen Gradientenvektors. Die Übergabe der Geometriedaten erfolgt damit besonders kompakt, und auch zu Zeiten, in denen zur Begrenzung der Datenmenge keine Geometriedaten übergeben werden, kann die zweite Steuerung unter minimalem Rechenaufwand ein sehr gutes Modell für diejenigen Bereiche der Objekte entwickeln, zu denen sie keine Geometriedaten erhält.

Bei allen beschriebenen Ausführungsformen ist der erste Sensor bevorzugt ein Laserscanner oder ein Bildsensor und der zweite Sensor ist bevorzugt ein Barcodescanner oder ebenfalls ein Bildsensor. Ein Laserscanner ist für die Bestimmung von Abstandsdaten geeignet, hat aber bewegliche mechanische Teile. Dagegen ist ein Bildsensor weniger wartungsanfällig, benötigt aber höheren Aufwand für die Bildauswertung. Die entsprechenden Vorzüge der möglichen Ausgestaltung von erstem und zweitem Sensor können somit je nach Anwendung ausgewählt werden In einer anderen Weiterbildung der Erfindung ist die Geometrie-Vermessungsvorrichtung mit einer nachgeordneten Verarbeitungseinrichtung, insbesondere einem Roboter, verbunden, wobei der erste Sensor in den Roboter integriert ist oder dieser Roboter dem ersten Sensor in Förderrichtung nachgeordnet ist, und wobei die Verarbeitungseinrichtung eine Verarbeitungssteuerung für den Empfang der Geometriedaten aufweist, die für die Verarbeitung der Geometriedaten zur Planung von Greif- und Bearbeitungsschritten ausgebildet ist. Ähnlich dem Codeleser kann auch ein Roboter von den in Echtzeit erhaltenen, von der Regelmäßigkeit der Objektkontur abhängigen Geometrieinformationen profitieren, deren Datenmenge sowohl zur Entlastung der Datenleitungen wie auch zur einfacheren Weiterverarbeitung erfindungsgemäß reduziert sind. Dies gilt nicht nur für einen Roboter, sondern auch für weitere denkbare nachgeordnete Systeme, welche Lage, Position, Volumen oder ähnliche Eigenschaften von Objekten für ihre Aufgabe benötigen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform der erfindungsgemäßen Vorrichtung über einem Förderband mit mehreren darauf bewegten Objekten;
- Fig. 2: eine schematische Draufsicht auf die Kontur der Oberfläche eines quaderförmigen Objekts zur Erläuterung der übergebenen reduzierten Geometrieinformationen;
- Fig. 3: eine schematische Draufsicht gemäß Figur 2 auf die Kontur eines unregelmäßig geformten Objekts sowie der zugehörigen übergebenen Geometrieinformationen;
- Fig. 4: eine schematische Draufsicht auf die Kontur eines unregelmäßig geformten Objekts mit einem umhüllenden einfachen Körper; und
- Fig. 5: eine Draufsicht auf ein Paket mit einem interessierenden Bereich, der eine Codeinformationen enthält.

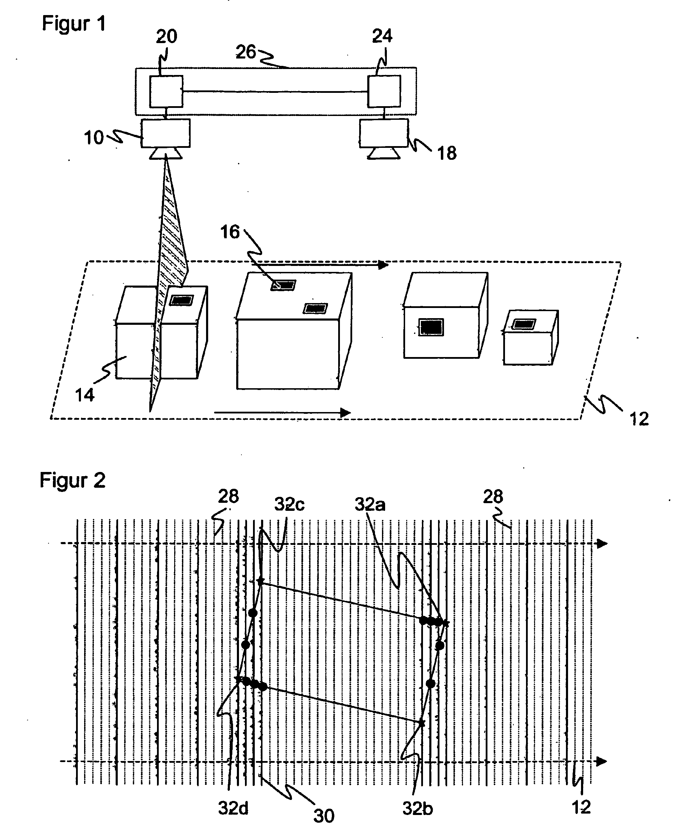

Figur 1 zeigt in einer schematischen dreidimensionalen Darstellung die Anordnung einer Ausführungsform eines erfindungsgemäßen Geometrie-Erfassungssensors 10 über einem Förderband 12, auf dem Objekte 14 in einer durch die Pfeile angedeuteten Richtung an dem Sensor 10 vorbeibewegt werden. Die Objekte 14 tragen Informationen 16, die von einer dem Sensor 10 nachgeordneten Zeilenkamera 18 erfasst und ausgelesen werden.

Der Sensor 10 ist ein Laserscanner, der mittels eines Lichtlaufzeitverfahrens Entfernungen der vorbeibewegten Objekte 16 bestimmen kann, oder der anhand des Remissionsverhaltens der Objekte 14 geometrische Informationen über die Objekte 14 gewinnen kann. Indem der Sensor 10 die vorbeibewegten Objekte 14 zeilenweise abtastet, nimmt er eine dreidimensionale Kontur des Förderbandes 12 und der auf ihm bewegten Objekte 14 auf. Dazu weist der Sensor 10 eine zugehörige Geometrieerfassungs-Steuerung 20 auf, welche die Konturinformationen zu gewünschten geometrischen Informationen über die Objekte 14 verrechnet, beispielsweise dem Volumen, der Lage, der Position, der Höhe oder andere denkbare geometrische Eigenschaften.

Über eine nicht dargestellte Schnittstelle zu einer Datenleitung oder einem Bussystem 22, das auch drahtlos sein kann, werden die in einer noch im Zusammenhang mit den Figuren 2 bis 5 zu beschreibenden Weise vorverarbeiteten Geometriedaten an eine ebenfalls nicht dargestellte Schnittstelle einer Kamerasteuerung 24 der Zeilenkamera 18 übergeben. Die Steuerungen 20 und 24 können alternativ auch eine zusammengefasste Steuerung 26 sein; über entsprechende Schnittstellen kann deren Position im Raum variiert werden.

Alternativ zu einem Laserscanner kann als Geometrie-Erfassungssensor 10 auch ein Bildsensor eingesetzt werden. Dieser kann Geometriedaten durch eine Bildauswertung erfassen, oder etwa nach dem Prinzip der Photonmischdetektion in der Lage sein, zu jedem Pixel seines CCD- oder CMOS-Aufnahmechips mittels eines Lichtlaufzeitverfahrens auch eine Entfernung zu bestimmen. Umgekehrt kann anstelle der Kamera 18, die ebenfalls einen CCD- oder CMOS-Chip enthält, ein anderes System eingesetzt sein, etwa ein Barcodescanner oder auch ein Roboter, welcher die Objekte ergreift oder bearbeitet. Bei einem Bildsensor, der zur Bestimmung von Entfernungsdaten ausgebildet ist, kann in einer weiteren Ausführungsform der Geometrie-Erfassungssensor 10 und die Zeilenkamera 18 basierend auf nur einem einzigen gemeinsamen Aufnahmechip integriert sein, etwa einem PMD-CMOS-Chip.

Die von dem Geometrie-Erfassungssensor 10 zu bestimmenden Geometriedaten können sich auf die Objekte 14, aber auch nur auf Teilbereiche dieser Objekte 14 beziehen. Teilbereiche innerhalb von Objekten 14, zu welchen Geometriedaten erzeugt werden, können bestimmte Strukturen 16 auf dem Objekt 14 (region within object) oder interessierende Bereiche (ROI, region of interest) sein, wie beispielsweise Etiketten, Codeinformationen, Schriftinformationen, es können aber auch andere Teilbereiche gemeint sein, etwa ein Schraubensockel oder ein Griff für die Bearbeitung durch einen Roboter.

Daher wird in dem Geometrie-Erfassungssensor 10 beziehungsweise in dessen Steuerung 20 eine Vorauswertung vorgenommen, welche einen oder mehrere örtliche Bereiche des Objekts 14 ermittelt, in dem derartige potentiell interessante Informationen 16 enthalten sind. Alternativ oder zusätzlich können auch solche Bereiche des Objekts 14 angegeben werden, in denen keine interessanten Informationen vorhanden sind (Clear Area). Im letztgenannten Fall weiß das nachgeordnete System 24, 18 zumindest, welche Bereiche keiner weiteren Auswertung oder Behandlung bedürfen.

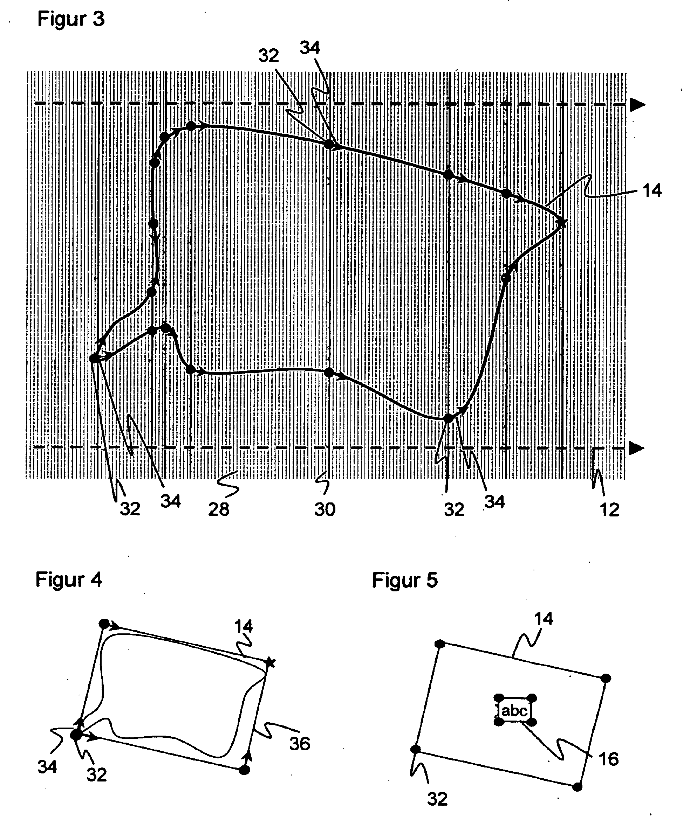

Erfindungsgemäß ist vorgesehen, dass der Geometrie-Erfassungssensor 10 die Geometrie mit einer hohen Auflösung aufnimmt, dann aber durch eine Vorauswertung reduziert und nur die entsprechend reduzierten Geometriedaten über seine Schnittstelle auf die Datenleitung 22 ausgibt. Dies wird nunmehr zunächst an einem quaderförmigen Objekt 14 anhand der Figur 2 und später an einem unregelmäßig geformten Objekt 14 anhand der Figur 3 erläutert.

In der Figur 2 liegt ein schräggestelltes quaderförmiges Objekt 14 auf der durch zwei gestrichelte Pfeile angedeuteten Fördereinrichtung 12. Mit senkrechten gestrichelten Linien 28 sind Abtastlinien des Geometrie-Erfassungssensors 10 angedeutet, mit denen zu verschiedenen Zeiten nach und nach das in verschiedenen Förderpositionen befindliche Objekt 14 abgetastet wird. Der Abstand der gestrichelten Linien 28 entspricht dabei der Auflösung, mit welcher der Geometrie-Erfassungssensor 10 zeilenweise abtastet. Im Gegensatz dazu bezeichnen durchgezogene Linien 30 Förderpositionen zu Geometrieinformationen, welche die Steuerung 20 des Geometrie-Erfassungssensors 10 auf die Datenleitung 22 legt. Die Ausgaberate ist gegenüber der Abtastrate erheblich geringer. Solange sich kein Objekt im Sichtfeld des Geometrie-Erfassungssensors 10 befindet, werden nur hin und wieder Geometriedaten ausgegeben. Es ist auch möglich, in solchen Situationen gar keine Geometriedaten zu übergeben, denn sie enthalten keine eigentlichen Informationen, sondern dienen nur als Zeichen, dass keine Störung vorliegt. Dabei ist auch möglich, dass die Abtastrate die maximale Ausgaberate übersteigt, also die Datenleitung 22 gar nicht ausreichend Bandbreite zur Verfügung stellt, um die höchstmöglich aufgelösten Geometrieinformationen zu übergeben.

Im Bereich des Objekts 14 selbst wird von der Steuerung 20 zunächst eine mit einem Stern gekennzeichnete Ecke 32a erkannt, die dazu veranlasst, wegen der starken Änderung der Geometrie des Objekts 14 mehr Geometrieinformationen zu übergeben. In der Figur 2 erstreckt sich dieses Intervall bis zu dem nächsten Eckepunkt 32b, und dazwischen werden Geometrieinformationen mit der höchstmöglichen Rate ausgegeben. Es ist auch denkbar, im Bereich zwischen den Eckpunkten 32a und 32b keine Geometrieinformationen auszugeben, da hier das Objekt wieder regelmäßig geformt ist. Die Ausgabe mit höherer Dichte in diesem Zwischenbereich ist also nicht durch die Unregelmäßigkeit in diesem Bereich selbst bedingt, sondern durch die Nähe zu einer Ecke, also einem Bereich großer Änderung. Auch diese Nähe kann demnach in das Maß einfließen, welches die Geometrieänderung misst und damit die Informationsdichte der Ausgabe steuert.

Im Bereich bis zur nächsten Ecke 32c ist die Geometrie wieder vollkommen regelmäßig, so dass keine Geometrieinformationen ausgegeben werden. Alternativ könnte auch hier sporadisch eine Information übergeben werden, um die weitere Funktionsfähigkeit des Geometrie-Erfassungssensors 10 anzuzeigen. Bis zur abschließenden Ecke 32d bei Austritt des Objekts 14 aus dem Sichtbereich des Sensors 10 werden ähnlich ihrem Eintritt Geometrieinformationen mit maximaler Dichte ausgegeben.

Der Geometrie-Erfassungssensor 10 beziehungsweise dessen Steuerung 20 erkennt also, dass nur der Eintritt und der Austritt der Eckpunkte 32 relevante geometrische Informationen erzeugt. Die Zwischenbereiche kann sich das nachgeordnete System 24 dann selber interpolieren oder extrapolieren.

Bei dem in Figur 3 dargestellten unregelmäßig geformten Objekt ist das Grundprinzip dasselbe. Auch hier wird die Kontur mit einer maximalen Auflösung 28 erfasst, aber nur Geometriedaten zu bestimmten Zeiten 30 übergeben, in denen starke Änderungen in der Objektkontur auftreten. Solche Änderungen erkennt der Geometrie-Erfassungssensor 10 jeweils an den Punkten 32, und zwar daran, dass die Konturlinie dort entweder einen Winkel bildet, der um ein vorgegebenes Maß von 180° abweicht, oder weil die aufakkumulierte Winkeländerung über mehrere Abtastlinien eine solche Abweichung überschreitet. Andere Maße sind denkbar und von der Erfindung umfasst.

Neben der Lage der Punkte 32, welche die Begrenzung des Objekts in der jeweiligen Abtastlinien bezeichnet, wird auch der Gradient der angrenzenden Fläche als Geometrieinformation übergeben. Dies ist in Figur 3 durch Pfeile 34 gekennzeichnet. Mit Hilfe des Punkts und des Pfeils, also einer Position mit einem Gradienten, kann die angrenzende Fläche von dem nachgeordneten System 24 extrapoliert werden. Die somit entstehende ebene Fläche oder gerade Kante beschreibt die unregelmäßige Konturlinie 14 bzw. die angrenzende Fläche solange ausreichend gut, bis erneut ein weiterer Punkt 32 mit einem neuen Gradienten 34 übergeben wird. Die unregelmäßige Konturlinie 14 ist so mit wenigen Positions -und Gradientendaten beschrieben.

In der Draufsicht gemäß Figur 3 ist das Objekt 14 nur eine einfache Linie als Begrenzung einer Fläche. Im dreidimensionalen Fall grenzen an diese Linie mehrere Flächen an, nämlich eine Seiten- und eine Dachfläche. Die Erfindung umfasst sowohl Beschreibungen der Geometrie mit einem Eckpunkt bzw. eine Kante und einem Gradienten, der entlang der Kanten führt, wie auch solche, bei der die Richtung angrenzender Flächen durch jeweils einen oder mehrere charakterisierende Vektoren beschrieben ist, die je nachdem Gradienten oder auch nur Steigungsvektoren in bestimmten geometrischen Schnitten sind, beispielsweise entlang einer Achse oder einer Ebene. Die Erfindung umfasst hier alle gängigen dem in der euklidischen Geometrie bewanderten Mathematiker bekannten Beziehungen für die lokale Beschreibung von Mannigfaltigkeiten und deren Rändern mittels Basis- oder Steigungsvektoren, auch wenn diese im Rahmen dieser Beschreibung streng mathematisch nicht immer korrekt als Gradient bezeichnet sind.

Da eine gewisse Zeit vergeht, bis das Objekt 14 auf der Fördereinrichtung 12 das nachgeordnete System 18 erreicht, sind keine ganz strengen Echtzeitanforderungen zu erfüllen. Somit kann die Steuerung 20 des Geometrie-Erfassungssensors 10 zumindest einige Abtastlinien 28 im Voraus einlesen. Diesen zeitlichen Vorsprung kann sie nutzen, um die Geometrieinformationen etwas verzögert und dafür mit einer besseren Abschätzung des Gradienten oder einer besseren Abschätzung der notwendigen zu übergebenen Positionen 32 zu übergeben, in welche die zwischenzeitlich eingelesenen Konturinformationen 28 einfließen. Sie kann den zeitlichen Vorsprung auch dafür nutzen, in Zeitfenstern, in denen die aktuell ausgelesene Geometrieinformation nicht stark variiert und in denen daher wenig Daten zu übergeben sind, ergänzende genauere Geometrieinformationen zu früher ausgelesenen Objektbereichen mit starker Variation auszugeben.

Figur 4 erläutert eine vereinfachte Ausführungsform, bei der ein unregelmäßig geformtes Objekt 14 durch einen einfachen Hüllkörper 36 angenähert wird. Dieser Körper ist vorzugsweise ein Quader, kann aber auch eine andere einfache geometrische Formen wie eine Kugel, ein Zylinder oder dergleichen sein. Anstelle der Geometrieinformationen über das unregelmäßige Objekt 14 selbst werden dann nur Geometrieinformationen über den umhüllenden Körper 36 ausgegeben. Dies reduziert die Datenmenge, folgt aber den Unregelmäßigkeiten des Objekts 14 quasi per definitionem nicht und kann daher für manche Anwendungen geeignet sein und für andere nicht. Die Übergabe der Geometrieinformationen über den Hüllkörper 36 erfolgt ganz analog wie im Zusammenhang mit Figur 2 oder 3 beschrieben für das Objekt 14 selbst.

Figur 5 erläutert eine Situation, bei der sich Objekte oder relevante Objektbereiche überlagern. Dargestellt ist ein interessierender Bereich, nämlich ein Codeetikett 16, auf einem Objekt 14. In diesem Fall werden einfach beide Regionen, deren Geometrie zu bestimmen ist, nämlich das Objekt 14 und der interessierende Bereich 16, analog den im Zusammenhang mit dem Figuren 2 und 3 beschriebenen Verfahren behandelt. Dabei werden also Geometrieinformationen zu den Bereichen 32, also Bereichen mit großer Änderung der Objektgeometrie, und gegebenenfalls zusätzlich Gradientenvektoren übergeben.

Erfindungsgemäß wird also das Objekt von einem vorgelagerten Sensor mit einer höheren Auflösung erfasst, als die Geometrieinformationen dann weitergegeben werden sollen. Der vorgelagerte Sensor bestimmt die Objekteigenschaften basierend auf Entfernungswerten und/oder Remissionswerten der Objekte. Unabhängig davon, ob Informationen zum gesamten Objekt oder nur zu Teilbereichen des Objekts ermittelt werden, wird die Häufigkeit der generierten Zwischeninformationen dynamisch an die sich verändernden Objekteigenschaften angepasst.

Als eine beispielhafte Ausführungsform ist ein Volumenmesssystem oder ein Laserscanner als vorgelagerter Sensor beschrieben worden, welcher Steuerinformationen in Form von Geometriedaten an ein Kamerasystem als nachgeordnetes System übergibt. In dem Kamerasystem können diese Steuerinformationen beispielsweise zur Fokussierung, der Einstellung anderer Aufnahmeparameter wie Aufnahmefrequenz, Helligkeit oder Zoomfaktor, oder zur Erkennung interessierender Bereiche ausgenutzt werden.

Dabei wird in sich stark verändernden Bereichen des Objektes die Information detaillierter erzeugt und übergeben als in eher homogenen und regelmäßigen Bereichen. Dazu werden die Geometrieinformationen in einem sich dynamisch anpassenden Abstand weitergegeben. Steuergröße für den dynamischen Abstand ist die Objektgeometrieänderung, d.h. ändert sich die Objektgeometrie stark, werden die Abstände kleiner, bleibt die Objektgeometrie regelmäßig, so werden die Abstände größer. Für die Betrachtung der Geometrieänderung wird das Objekt in allen Dimensionen ausgewertet.

Die zu einem Abschnitt ausgegeben Geometrieinformationen können mit Positionsangaben in Förderrichtung, beispielsweise einem Inkrementalgeberstand, versehen werden, damit ihnen eine Position auf dem Förderband zugeordnet werden kann. Damit können beispielsweise auch sich ändernde Höhenverhältnisse innerhalb des Objekts abgebildet werden. Aus den übermittelten Geometriedaten können die angeschlossenen Systeme die Objektform im Rahmen der geforderten und eingestellten Genauigkeit des Geometriemodells verlustfrei oder nahezu verlustfrei errechnen.

Zusätzlich werden weiterhin Informationen des umhüllenden Körpers generiert. Diese Informationen können von übergeordneten Prozessen alternativ oder zusätzlich beispielsweise für Positions-, Belegt- oder Greifinformationen verwendet werden.

Damit wird das Bussystem und die Kamera nicht mit unnötigen Daten belastet. Ähnlich wie ein Kamerasystem können auch andere Systeme wie etwa Roboterhandlingsysteme von der Erfindung profitieren.

Eine besondere Stärke der Erfindung liegt in Situationen, in denen ein Objekt 14 größer ist als der Abstand zwischen dem Geometrie-Erfassungssensor 10 und dem nachgeordneten System. Dann kann die Geometrieerfassung noch nicht abgeschlossen sein, während die weitere Bearbeitung schon stattfindet. Hier hilft die Inter- und Extrapolation der Objektkontur weiter.

## Patentansprüche

1. Objektgeometrie-Vermessungsvorrichtung (10, 20) zur dynamischen Erzeugung und Weitergabe von Geometriedaten auf einer Fördereinrichtung (12) bewegter Objekte (14), wobei die Vorrichtung einen ersten optoelektronischen Sensor (10), der für die Erfassung der Objektgeometrie in einem Abschnitt des Objekts (14) anhand von Abständen und/oder des Remissionsverhaltens ausgebildet ist, sowie eine erste Steuerung (20) aufweist, welche aus der Objektgeometrie jedes Abschnitts Geometriedaten berechnet und über eine erste Schnittstelle ausgeben kann,
**dadurch gekennzeichnet,**
**dass** die erste Steuerung (20) dafür ausgebildet ist, die Informationsdichte der ausgegebenen Geometriedaten an ein Maß für Veränderungen der Objektgeometrie von Abschnitt zu Abschnitt anzupassen.

2. Objektgeometrie-Vermessungsvorrichtung (10, 20) nach Anspruch 1,
wobei der erste Sensor (10) ein Zeilensensor und jeder Abschnitt eine Zeile ist, und wobei die ausgegebenen Geometriedaten die Positionen (32) von Kanten oder Ecken der Objekte (14) oder interessierender Bereiche, insbesondere Codebereiche, innerhalb jeder Zeile sind.

3. Objektgeometrie-Vermessungsvorrichtung (10, 20) nach Anspruch 1 oder 2,
wobei die erste Steuerung (20) dafür ausgebildet ist, zu jeder Kante oder Ecke je einen Gradientenvektor (34) für die angrenzenden Flächen auszugeben und erst dann weitere Geometriedaten zu einer Kante oder Ecke auszugeben, wenn sich der Gradient einer Flächen in einem Abschnitt gegenüber dem ausgegebenen Gradientenvektor (34) oder demjenigen des vorherigen Abschnitts um mehr als eine vorgegebene Gradientenschwelle verändert.

4. Objektgeometrie-Vermessungsvorrichtung (10, 20) nach einem der vorhergehenden Ansprüche,
wobei die erste Steuerung (20) dafür ausgebildet ist, Geometriedaten für jeden Abschnitt auszugeben, wenn die Veränderungen größer sind als eine vorgegebene Schwelle, und keine oder nur für jeden n-ten Abschnitt Geometriedaten auszugeben, wenn die Veränderungen kleiner sind als eine vorgegebene Schwelle.

5. Objektgeometrie-Vermessungsvorrichtung (10, 20) nach einem der vorhergehenden Ansprüche,
wobei die Geometriedaten eine Lage, ein Volumen, eine Kontur und/oder eine Orientierung der Objekte (14) aufweisen.

6. Lesevorrichtung (10, 20, 18, 24) für Codes von auf einer Fördereinrichtung (12) bewegten Objekten (14) mit einer Geometrie-Vermessungsvorrichtung (10, 20) nach einem der Ansprüche 1 bis 5 und mit einem integrierten oder in Förderrichtung nachgeordneten zweiten optoelektronischen Sensor (18), der für die Erfassung von Codes ausgelegt ist, sowie mit einer zweiten Schnittstelle für den Empfang der Geometriedaten.

7. Lesevorrichtung (10, 20, 18, 24) nach Anspruch 6,
wobei eine zweite Steuerung (24) des zweiten Sensors (18) vorgesehen ist, welche dafür ausgebildet ist, Bilddaten innerhalb durch die Geometriedaten bezeichneter Objekte (14) oder interessierender Bereiche (16) ausschließlich oder mit höherer Genauigkeit aufzunehmen oder auszuwerten und entsprechend Bilddaten außerhalb durch die Geometriedaten bezeichneter Objekte (14) oder interessierender Bereiche (16) gar nicht oder mit geringerer Genauigkeit aufzunehmen oder auszuwerten.

8. Lesevorrichtung (10, 20, 18, 24) nach Anspruch 6 oder 7,
wobei die zweite Steuerung (24) dafür ausgebildet ist, Objektgrenzen oder Grenzen interessierender Bereiche anhand von übergebenen Positionen von Kanten oder Ecken der Objekte (14) oder interessierenden Bereiche (16) zu bestimmen und diese Grenzen zu interpolieren und/oder zu extrapolieren, insbesondere linear mittels eines ebenfalls übergebenen Gradientenvektors (34).

9. Vorrichtung (10, 18) nach einem der vorhergehenden Ansprüche,
wobei der erste Sensor (10) ein Laserscanner oder ein Bildsensor und der zweite Sensor (18) ein Barcodescanner oder ein Bildsensor ist.

10. Vorrichtung zur automatischen Bearbeitung auf einer Fördereinrichtung (12) bewegter Objekte (14) mit einer Geometrie-Vermessungsvorrichtung (10, 20) nach einem der Ansprüche 1 bis 6, wobei eine Verarbeitungseinrichtung, insbesondere ein Roboter, vorgesehen ist, in welchen der erste Sensor (10) integriert oder welcher dem ersten Sensor (10) in Förderrichtung nachgeordnet ist, wobei die Verarbeitungseinrichtung eine Verarbeitungssteuerung für den Empfang der Geometriedaten aufweist, die für die Verarbeitung der Geometriedaten zur Planung von Greif- und Bearbeitungsschritten ausgebildet ist.

11. Verfahren zur dynamischen Erzeugung und Weitergabe von Geometriedaten auf einer Fördereinrichtung (12) bewegter Objekte (14), wobei die Objektgeometrie in einem Abschnitt des Objekts anhand von Abständen und/oder des Remissionsverhaltens erfasst wird, aus der Objektgeometrie jedes Abschnitts Geometriedaten berechnet und über eine erste Schnittstelle ausgegeben werden,
**dadurch gekennzeichnet**,
die Informationsdichte der ausgegebenen Geometriedaten an ein Maß für Veränderungen der Objektgeometrie von Abschnitt zu Abschnitt angepasst werden.

12. Verfahren nach Anspruch 11,
wobei jeder Abschnitt eine Zeile ist, wobei die ausgegebenen Geometriedaten die Positionen von Kanten oder Ecken der Objekte (14) oder interessierender Bereiche (16), insbesondere Codebereiche, innerhalb jeder Zeile sind, und
wobei zu jeder Kante oder Ecke je einen Gradientenvektor (34) für die angrenzenden Flächen und erst dann weitere Geometriedaten zu einer Kante oder Ecke ausgegeben werden, wenn sich der Gradient einer Fläche in einem Abschnitt gegenüber dem ausgegebenen Gradientenvektor (34) oder demjenigen des vorherigen Abschnitts um mehr als eine vorgegebene Gradientenschwelle verändert.

13. Verfahren nach Anspruch 11 oder 12,
wobei Geometriedaten für jeden Abschnitt ausgegeben werden, wenn die Veränderungen größer sind als eine vorgegebene Schwelle, und keine oder nur für jeden n-ten Abschnitt Geometriedaten ausgegeben werden, wenn die Veränderungen kleiner sind als eine vorgegebene Schwelle.

14. Verfahren zum Lesen von Codes von auf einer Fördereinrichtung (12) bewegten Objekten (14), wobei die nach einem Verfahren gemäß einem der Ansprüche 11 bis 13 ausgegebenen Geometriedaten Grenzen von Objekten (14) oder interessierenden Bereichen (16) angeben, und wobei die ausgegebenen Geometriedaten verwendet werden, um ausschließlich innerhalb der Grenzen oder innerhalb der Grenzen mit einer höheren Genauigkeit Bilddaten zu erzeugen oder auszuwerten, um Codeinforrnationen aufzufinden und zu lesen.

15. Verfahren nach Anspruch 14,
wobei die Geometriedaten als Positionen von Kanten oder-Ecken der Objekte (14) oder interessierenden Bereiche zusammen mit Gradienten der angrenzenden Flächen ausgegeben werden und die Grenzen aus diesen Informationen insbesondere linear interpoliert und extrapoliert werden.

16. Verfahren nach Anspruch 14 oder 15,
wobei die Geometriedaten verwendet werden, um Aufnahmeparameter eines optoelektronischen Sensors (18) zu planen und einzustellen, insbesondere Fokus, Zoom, Helligkeit oder Aufnahmefrequenz.

17. Verfahren zur automatischen Bearbeitung auf einer Fördereinrichtung bewegter Objekte (14), wobei Greif- und Bearbeitungsschritte einer Verarbeitungseinrichtung an den Objekten (14), insbesondere solche eines Roboters, mittels eines Verfahrens nach einem der Ansprüche 11 bis 13 bestimmter Geometriedaten geplant werden.

## Claims

1. An object geometry measurement apparatus (10, 20) for the dynamic generation and transmission of geometrical data of objects (14) moved on a conveying device (12), wherein the apparatus has a first optoelectronic sensor (10) which is made for the detection of the object geometry in a section of the object (14) with reference to intervals and/or of the remission behavior, as well as a first control (20) which calculates geometrical data from the object geometry of each section and can output them via a first interface,
**characterized in that**
the first control (20) is made to adapt the information density of the output geometrical data to a measure for changes of the object geometry from section to section.

2. An object geometry measurement device (10, 20) in accordance with claim 1, wherein the first sensor (10) is a line scan sensor and each section is a line; and wherein the output geometrical data are the positions (32) of edges or corners of the objects (14) or of regions of interest, in particular code regions, within each line.

3. An object geometry measurement device (10, 20) in accordance with claim 1 or claim 2, wherein the first control (20) is designed to output one respective gradient vector (34) with respect to each edge or corner for the adjacent surfaces and only to output further geometrical data with respect to a corner or edge when the gradient of a surface in a section changes with respect to the output gradient vector (34) or to that of the previous section by more than a preset gradient threshold.

4. An object geometry measurement device (10, 20) in accordance with any one of the preceding claims, wherein the first control (20) is made to output geometrical data for each section if the changes are larger than a preset threshold and not to output any geometrical data or only to output geometrical data for every nth section if the changes are smaller than a preset threshold.

5. An object geometry measurement device (10, 20) in accordance with any one of the preceding claims, wherein the geometrical data have a location, a volume, a contour and/or an orientation of the objects (14).

6. A reading apparatus (10, 20, 18, 24) for codes of objects (14) moved on a conveying device (12) having a geometry measurement apparatus (10, 20) in accordance with any one of the claims 1 to 5 and having an integrated second optoelectronic sensor (18) or a second optoelectronic sensor arranged subsequently in the conveying direction which is made for the detection of codes as well as having a second interface for the reception of the geometrical data.

7. A reading apparatus (10, 20, 18, 24) in accordance with claim 6, wherein a second control (24) of the second sensor (18) is provided which is designed only to take or evaluate image data within objects (14) marked by the geometrical data or within regions (16) of interest or to take them or evaluate them at a higher precision and accordingly not to take or evaluate image data outside objects (14) marked by the geometrical data or outside regions (16) of interest at all or only to take or evaluate them at a lower precision.

8. A reading apparatus (10, 20, 18, 24) in accordance with claim 6 or claim 7, wherein the second control (24) is made to determine object limits or limits of regions of interest with reference to transmitted positions of edges or corners of objects (14) or regions (16) of interest and to interpolate and/or extrapolate these limits, in particular in a linear manner, by means of a likewise transmitted gradient vector (34).

9. An apparatus (10, 18) in accordance with any one of the preceding claims, wherein the first sensor (10) is a laser scanner or an image scanner and the second scanner (18) is a barcode scanner or an image sensor.

10. An apparatus for the automatic machining of objects (14) moved on a conveying device (12) having a geometry measurement apparatus (10, 20) in accordance with any one of the claims 1 to 6, wherein a processing device, in particular a robot, is provided into which the first senor (10) is integrated or which is arranged subsequently to the first sensor (10) in the conveying direction, wherein the processing device has a processing control for the reception of the geometrical data which is made for the processing of the geometrical data for the planning of gripping steps and machining steps.

11. A method for the dynamic generation and transmission of geometrical data of objects (14) moved on a conveying device (12), wherein the object geometry is detected in a section of the object with reference to intervals and/or to the remission behavior, wherein geometrical data are calculated from the object geometry of each section and are output via a first interface,
**characterized in that**
the information density of the output geometrical data is adapted to a measure for changes of the object geometry from section to section.

12. A method in accordance with claim 11, wherein each section is a line, wherein the output geometrical data are the positions of edges or corners of the objects (14) or of regions (16) of interest, in particular code regions, within each line, and wherein a gradient vector (34) is output for the adjacent surfaces with respect to each edge or corner and further geometrical data with respect to an edge or corner are only output when the gradient of a surface changes in a section with respect to the output gradient vector (34) or that of the previous section by more than a preset gradient threshold.

13. A method in accordance with claim 11 or claim 12, wherein geometrical data are output for each section if the changes are larger than a preset threshold and no geometrical data are output or geometrical data are only output for every nth section if the changes are smaller than a preset threshold.

14. A method for the reading of codes of objects (14) moved on a conveying device (12), wherein the geometrical data output in accordance with a method in accordance with any one of the claims 11 to 13 are borders of objects (14) or of regions (16) of interest, and wherein the output geometrical data are used to generate or evaluate image data only within the borders or within the borders at a higher precision in order to locate and read code information.

15. A method in accordance with claim 14, wherein the geometrical data are output as positions of edges or corners of the objects (14) or of regions of interest together with gradients of the adjacent surfaces and the borders are interpolated and extrapolated, in particular in a linear manner, from this information.

16. A method in accordance with claim 14 or claim 15, wherein the geometrical data are used to plan and set taking parameters of an optoelectronic sensor (18), in particular the focus, zoom, brightness or taking frequency.

17. A method for the automatic machining of objects (14) moved on a conveying device, wherein gripping steps and machining steps of a processing device are planned at the objects (14), in particular those of a robot, by means of a method in accordance with any one of the claims 11 to 13 by means of specific geometrical data.

## Revendications

1. Dispositif de mesurage de géométrie d'objet (10, 20) pour la génération dynamique et la transmission de données de géométrie d'objets (14) déplacés sur un dispositif de transport (10), le dispositif présentant un premier capteur (10) optoélectronique, qui est conçu pour la saisie de la géométrie d'objet dans une partie de l'objet (14) à l'aide d'espacements et/ou du comportement de rémission, ainsi qu'une première commande (20) qui calcule des données de géométrie à partir de la géométrie d'objet de chaque partie et peut les éditer au moyen d'une première interface,
**caractérisé en ce que**
la première commande (20) est conçue pour adapter la densité d'information des données de géométrie éditées à une grandeur pour des modifications de la géométrie d'objet de partie en partie.

2. Dispositif de mesurage de géométrie d'objet (10, 20) selon la revendication 1, le premier capteur (10) étant un capteur de lignes et chaque partie une ligne, et les données de géométrie éditées étant les positions (32) d'arêtes ou d'angles des objets (14) ou de zones intéressantes, en particulier des plages de code, à l'intérieur de chaque ligne.

3. Dispositif de mesurage de géométrie d'objet (10, 20) selon la revendication 1 ou 2, la première commande (20) étant conçue pour éditer pour chaque arête ou angle un vecteur de gradients (34) pour les surfaces contiguës et éditer ensuite d'autres données de géométrie pour une arête ou un angle uniquement dans les cas où le gradient d'une surface dans une partie change par rapport au vecteur de gradients (34) édité ou au vecteur de gradients de la partie précédente de plus d'un seuil de gradient prédéfini.

4. Dispositif de mesurage de géométrie d'objet (10, 20) selon l'une quelconque des revendications précédentes, la première commande (20) étant conçue pour éditer des données de géométrie pour chaque partie lorsque les modifications sont supérieures à un seuil prédéfini, et pour n'éditer aucune donnée de géométrie ou que des données de géométrie pour chaque n-ième partie lorsque les modifications sont inférieures à un seuil prédéfini.

5. Dispositif de mesurage de géométrie d'objet (10, 20) selon l'une quelconque des revendications précédentes, les données de géométrie présentant une position, un volume, un contour et/ou une orientation des objets (14).

6. Dispositif de lecture (10, 20, 18, 24) pour les codes d'objets (14) déplacés sur un dispositif de transport (12) avec un dispositif de mesurage de géométrie (10, 20) selon l'une quelconque des revendications 1 à 5 et avec un second capteur (18) optoélectronique intégré ou disposé en aval dans le sens de transport, qui est conçu pour la saisie de codes, ainsi qu'avec une seconde interface pour la réception des données de géométrie.

7. Dispositif de lecture (10, 20, 18, 24) selon la revendication 6, une seconde commande (24) du second capteur (18) étant prévue, laquelle est conçue pour enregistrer ou analyser des données d'image à l'intérieur d'objets (14) désignés par les données de géométrie ou de zones (16) intéressantes de façon exclusive ou avec une précision supérieure et pour enregistrer ou analyser de façon appropriée des données d'image à l'extérieur d'objets (14) désignés par les données de géométrie ou de zones (16) intéressantes avec une précision inférieure ou pas du tout.

8. Dispositif de lecture (10, 20, 18, 24) selon la revendication 6 ou 7, la seconde commande (24) étant conçue pour déterminer des limites d'objet ou des limites de zones intéressantes à l'aide de positions transmises d'arêtes ou d'angles des objets (14) ou des zones (16) intéressantes et pour interpoler et/ou extrapoler ces limites, en particulier de façon linéaire au moyen d'un vecteur de gradients (34) également transmis.

9. Dispositif (10, 18) selon l'une quelconque des revendications précédentes, le premier capteur (10) étant un scanner à laser ou un capteur d'image et le second capteur (18) un scanner de codes à barres ou un capteur d'image.

10. Dispositif pour l'usinage automatique d'objets (14) déplacés sur un dispositif de transport (12) avec un dispositif de mesurage de géométrie (10, 20) selon l'une quelconque des revendications 1 à 6, un dispositif de traitement, en particulier un robot, étant prévu, dans lequel le premier capteur (10) est intégré et qui est disposé en aval du premier capteur (10) dans le sens de transport, le dispositif de traitement présentant une commande de traitement pour la réception des données de géométrie, qui est conçue pour le traitement des données de géométrie pour la planification d'étapes de préhension et d'usinage.

11. Procédé pour la production dynamique et la transmission de données de géométrie d'objets (14) déplacés sur un dispositif de transport (12), la géométrie d'objets étant enregistrée dans une partie de l'objet à l'aide d'espacements et/ou du comportement de rémission, des données de géométrie étant calculées à partir de la géométrie de l'objet de chaque partie et étant éditées au moyen d'une première interface,
**caractérisé en ce que**
la densité d'information des données de géométrie éditées est adaptée à une grandeur pour des modifications de la géométrie d'objet de partie en partie.

12. Procédé selon la revendication 11,
chaque partie étant une ligne, les données de géométrie éditées étant les positions d'arêtes ou d'angles des objets (14) ou de zones (16) intéressantes, en particulier de zones de codes, à l'intérieur de chaque ligne, un vecteur de gradients (34) pour les surfaces contiguës étant édité pour chaque arête ou angle et ensuite d'autres données de géométrie pour une arête ou un angle étant éditées uniquement dans le cas où le gradient d'une surface dans une partie varie de plus d'un seuil de gradient prédéfini par rapport au vecteur de gradients (34) édité ou à celui de la partie précédente.

13. Procédé selon la revendication 11 ou 12, des données de géométrie étant éditées pour chaque partie lorsque les modifications sont supérieures à un seuil prédéfini et que aucune donnée de géométrie n'est éditée ou que des données de géométrie sont éditées seulement pour chaque n-ième partie lorsque les modifications sont inférieures à un seuil prédéfini.

14. Procédé pour la lecture de codes d'objets (14) déplacés sur un dispositif de transport (12), les données de géométrie éditées d'après un procédé selon l'une quelconque des revendications 11 à 13 indiquant des limites d'objets (14) ou de zones (16) intéressantes, et les données de géométrie éditées étant utilisées pour générer ou analyser des données d'image uniquement à l'intérieur des limites ou à l'intérieur des limites avec une précision assez élevée, afin de recueillir et de lire des informations de code.

15. Procédé selon la revendication 14, les données de géométrie étant éditées sous forme de positions d'arêtes ou d'angles des objets (14) ou de zones intéressantes en même temps que des gradients des surfaces contiguës et les limites étant interpolées ou extrapolées à partir de ces informations, en particulier sous forme linéaire.

16. Procédé selon la revendication 14 ou 15, les données de géométrie étant utilisées pour planifier et régler des paramètres d'enregistrement d'un capteur (18) optoélectronique, en particulier le foyer, le zoom, la clarté et la fréquence d'enregistrement.

17. Procédé pour l'usinage automatique d'objets (14) déplacés sur un dispositif de transport, les étapes de préhension et d'usinage d'un dispositif de traitement sur les objets (14), en particulier celles d'un robot, étant planifiées au moyen d'un procédé selon l'une quelconque des revendications 11 à 13 de données de géométrie définies.
